# EUROPEAN PATENT APPLICATION

(11) **EP 1 788 823 A2**
(43) Date of publication of application: **23.05.2007**
(21) Application number: 06123800.2
(22) Date of filing: 10.11.2006
(51) Int. Cl.: H04N 9/69

(54) **Video Processing Apparatus and Video Processing Method**

(30) Priority: 17.11.2005 KR 20050110324
(71) Applicant: Samsung Electronics Co., Ltd., Seoul 442-742 (KR)
(72) Inventor: LEE, Eun-bae, Samwhan Apt., Gyeonggi-do (KR)
(74) Representative: Brandon, Paul Laurence

(57) **Abstract**

A video processing apparatus includes: a storing unit which stores first pixel data of a first frame of a video, second pixel data of a second frame of the video, a first correction factor, and a second correction factor, wherein the first frame precedes the second frame, the first correction factor corresponds to a difference between the first pixel data and the second pixel data, and the second correction factor corresponds to the first pixel data; and a correction performing unit which corrects the first pixel data by simultaneously applying the first correction factor and the second correction factor.

## Description

The present invention relates to video processing apparatus and methods.

A video processing apparatus, such as a television (TV), receives a video signal from a broadcasting station or an external device such as a video cassette recorder (VCR), a digital versatile disc (DVD) player, a personal computer (PC) or the like, performs video processing suitable for the received video signal, and displays a video based on the processed video signal.

According to a related art video processing apparatus, however, gamma correction is operated to correct an error caused by a difference between the strength and the luminance (or the brightness) of the video signal. But the gamma correction alone is insufficient to improve the quality of a video.

Preferred embodiments of the present invention aim to provide a video processing apparatus and a video processing method which are capable of improving the quality of a video.

According to an aspect of the present invention, there is provided a video processing apparatus comprising: a storing unit which stores first pixel data of a first frame of a video, second pixel data of a second frame of the video, a first correction factor, and a second correction factor, wherein the first frame precedes the second frame, the first correction factor corresponds to a difference between the first pixel data and the second pixel data, and the second correction factor corresponds to the first pixel data; and a correction performing unit which corrects the first pixel data by simultaneously applying the first correction factor and the second correction factor.

Suitably, the second correction factor corresponds to a difference between the strength of a video indicated by the first pixel data and the brightness of the video indicated by the first pixel data.

Suitably, the video processing apparatus further comprises a display unit which displays the video, wherein the first correction factor is used for compensating a response time delay caused by a characteristic of the display unit.

Suitably, the characteristic comprises a gray-to-gray response time of the display unit.

Suitably, the video processing apparatus further comprises a liquid crystal display (LCD) which displays the video based on the first pixel data.

Suitably, the first and second frames are consecutive frames of the video in time.

Suitably, the storing unit comprises: a first frame storing unit which stores the first pixel data; a second frame storing unit which stores the second pixel data; a first correction factor storing unit which stores the first correction factor; and a second correction factor storing unit which stores the second correction factor.

According to an aspect of the present invention, there is provided a video processing method comprising: storing a first correction factor corresponding to a difference between first pixel data of a first frame of a video and second pixel data of a second frame of the video, wherein the first frame precedes the second frame; storing a second correction factor corresponding to the first pixel data; storing the first pixel data; storing the second pixel data; and correcting the first pixel data by simultaneously applying the first correction factor and the second correction factor.

Suitably, the second correction factor corresponds to a difference between the strength of a video indicated by the first pixel data and the brightness of the video indicated by the first pixel data.

Suitably, the video processing apparatus further comprises displaying the video, wherein the correcting of the first pixel data comprises compensating a response time delay, caused by a characteristic of a display unit which displays the video, by applying the first correction factor.

Suitably, the characteristic comprises a gray-to-gray response time of the display unit.

Suitably, the video processing method further comprises displaying the video based on the corrected first pixel data on a liquid crystal display (LCD).

Suitably, the first and second frames are consecutive frames of the video in time.

According to an aspect of the present invention, there is provided a video processing apparatus comprising: a storing unit which stores first pixel data of a first frame of a video, and second pixel data of a second frame of the video, a first correction factor, and a second correction factor, wherein the first frame precedes the second frame, the first correction factor corresponds to a difference between the first pixel data and the second pixel data, and the second correction factor corresponds to the first pixel data; a first correction performing unit which corrects the first pixel data by applying the first correction factor; and a second correction performing unit which corrects the first pixel data, corrected by applying the first correction factor, by applying the second correction factor.

Suitably, the second correction factor corresponds to a difference between the strength of a video indicated by the first pixel data and the brightness of the video indicated by the first pixel data.

Suitably, the video processing apparatus further comprises a display unit which displays the video, wherein the first correction factor is used for compensating a response time delay caused by a characteristic of the display unit.

Suitably, the characteristic comprises a gray-to-gray response time of the display unit.

Suitably, the first and second frames are consecutive frames of the video in time.

Suitably, the storing unit comprises: a first frame storing unit which stores the first pixel data; a second frame storing unit which stores the second pixel data; a third frame storing unit which stores the first pixel data corrected by applying the first correction factor; a first correction factor storing unit which stores the first correction factor; and a second correction factor storing unit which stores the second correction factor.

According to an aspect of the present invention, there is provided a video processing method comprising: storing a first correction factor corresponding to a difference between first pixel data of a first frame of a video and second pixel data of a second frame of the video, wherein the first frame precedes the second frame; storing a second correction factor corresponding to the first pixel data; storing the first pixel data; storing the second pixel data; correcting the first pixel data by applying the first correction factor; storing the first pixel data corrected by applying the first correction factor; and correcting the first pixel data, corrected by the first correction factor, by applying the second correction factor.

Suitably, the second correction factor corresponds to a difference between the strength of a video indicated by the first pixel data and the brightness of the video indicated by the first pixel data.

Suitably, the video processing method further comprises displaying the video, wherein the correcting of the first pixel data by applying the first correction factor comprises compensating a response time delay, caused by a characteristic of a display unit which displays the video, by applying the first correction factor.

Suitably, the characteristic comprises a gray-to-gray response time of the display unit.

Suitably, the first and second frames are consecutive frames of the video in time.

The present invention will become apparent and more readily appreciated from the following description of exemplary embodiments, taken in conjunction with the accompany drawings, in which:
FIG. 1 is a block diagram illustrating a configuration of a video processing apparatus according to a first exemplary embodiment of the present invention;
FIG. 2 is a block diagram illustrating a detailed configuration of a response time compensating part and a gamma correcting part in the video processing apparatus of FIG. 1, according to an exemplary embodiment of the present invention;
FIG. 3 is a schematic block diagram illustrating a configuration of a video processing apparatus according to a second exemplary embodiment of the present invention;
FIG. 4 is a block diagram illustrating a detailed configuration of a correcting part in the video processing apparatus of FIG. 3, according to an exemplary embodiment of the present invention; and
FIG. 5 is a flow chart illustrating a video processing method according to an exemplary embodiment of the present invention.

Reference will now be made in detail to exemplary embodiments of the present invention, examples of which are illustrated in the accompanying drawings, wherein like reference numerals refer to like elements throughout.

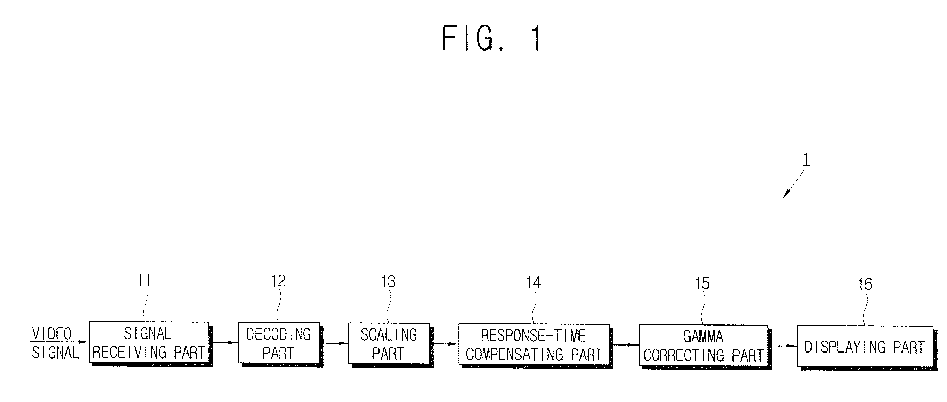

A configuration of a video processing apparatus 1 according to a first exemplary embodiment of the present invention is shown in FIG. 1. The video processing apparatus 1 may be an LCD TV or the like. The video processing apparatus 1 receives a video signal from a broadcasting station or an external device (not shown) such as a VCR, a DVD player, a PC or the like, suitably processes the received video signal, and displays a video based on the processed video signal. The video processing apparatus 1 includes a signal receiving part 11, a decoding part 12, a scaling part 13, a response time compensating part 14, a gamma correcting part 15, and a displaying part 16. The signal receiving part 11 receives a video signal from a broadcasting station or the like and tunes the received video signal to a frequency corresponding to a channel selected by a user. The decoding part 12 decodes the video signal tuned by the signal receiving part 11 and outputs the decoded video signal to the displaying part 16 as a video signal of a type which can be displayed on displaying part 16. The scaling part 13 adjusts resolution of the video signal decoded by the decoding part 12 based on a user's setting and a characteristic of the displaying part 16. The response time compensating part 14 compensates a response time delay caused by the characteristic of the displaying part 16 such as an LCD. The gamma correcting part 15 corrects an error caused by a difference between the strength and the brightness (or luminance) of the video signal. The displaying part 16 displays the video based on the corrected video signal. Herein, the response time compensating part 14 compensates a characteristic such as a gray-to-gray response time of an LCD. The gamma correcting part 15 performs the correction so as to overcome a problem that colors in regions of low brightness and/or medium brightness are distorted since a gamma characteristic (or gamma curve) does not correspond to a standard gamma characteristic.

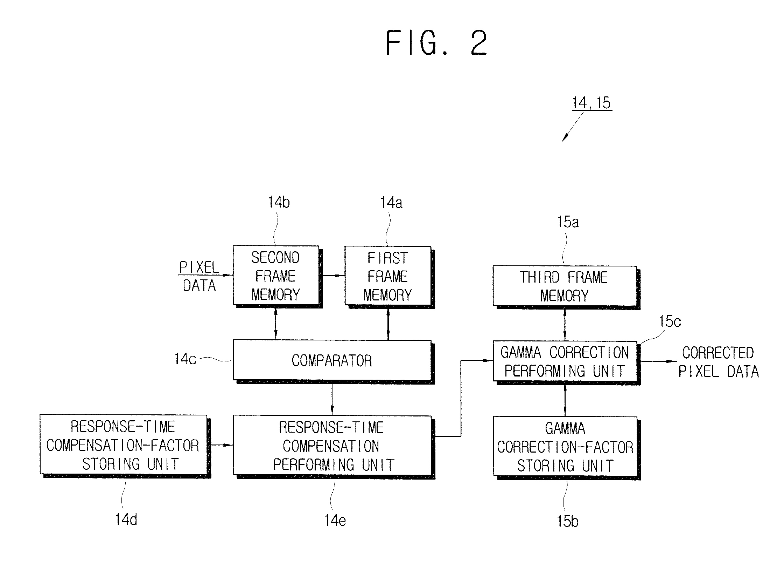

More detailed structures of the response time compensating part 14 and the gamma correcting part 15 in the video processing apparatus 1 of FIG. 1 are shown in FIG. 2 according to an exemplary embodiment of the present invention. The response time compensating part 14 and the gamma correcting part 15 include a first frame memory 14a, a second frame memory 14b, a comparator 14c, a response time compensation factor storing unit 14d, a response time compensation performing unit 14e, a third frame memory 15a, a gamma correction factor storing unit 15b, and a gamma correction performing unit 15c.

The first frame memory 14a and the second frame memory 14b store pixel data of plural pixels composing a video in units of frames. That is, the fist frame memory 14a and the second frame memory 14b store the pixel data of two consecutive frames, (hereinafter, referred to as "a first frame" and "a second frame"), respectively. The comparator 14c compares the pixel data of the first and second frames stored in the first frame memory 14a and the second frame memory 14b between pixels at the same location and then outputs a difference between the pixel data.

In the response time compensation factor storing unit 14d are stored response-time compensation factors corresponding to the difference between pixel data of two frames in the form of a table. The response time compensation performing unit 14e compensates a frame preceding in time, that is, the pixel data of the first frame based on the response time compensation factor corresponding to the difference between the pixel data in the first and second frames outputted from the comparator 14c by referring to the response time compensation factor storing unit 14d.

For example, if the pixel data of the first frame to be corrected for a certain pixel has a gray scale of 128, the pixel data of the second frame for that pixel has a gray scale of 100, and the response-time compensation factor corresponding to the difference, that is a gray scale of 28, between the pixel data of the two frames has a gray scale of 10, the response-time compensation performing unit 14e adds the response-time compensation factor to the pixel data of the first frame to output pixel data having a gray scale of 138.

Meanwhile, the third frame memory 15a stores the pixel data compensated by the response time compensation performing unit 14e in units of frames. The gamma correction factor storing unit 15b stores gamma correction factors corresponding to pixel data in the form of a table. The gamma correction performing unit 15c corrects corresponding pixel data based on the gamma correction factor corresponding to the pixel data stored in the third frame memory 15a by referring to the gamma correction factor storing unit 15b.

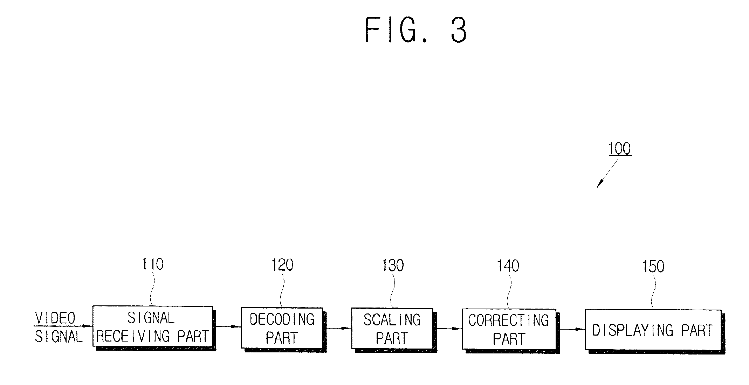

FIG. 3 is a schematic block diagram illustrating a configuration of a video processing apparatus 100 according to a second exemplary embodiment of the present invention. As shown in FIG. 3, the video processing apparatus 100 includes a signal receiving part 110, a decoding part 120, a scaling part 130, a correcting part 140, and a displaying part 150. The signal receiving part 110 tunes and receives the video signal from the broadcasting station or the like in accordance with a frequency corresponding to a channel selected by a user. The decoding part 120 decodes the video signal received by the signal receiving part 110 and outputs the decoded video signal to the displaying part 150 as a video signal of a type which can be displayed on the displaying part 150. The scaling part 130 adjusts resolution of the video signal decoded by the decoding part 120 based on the user's setting and a characteristic of the display unit 150.

The correcting part 140 performs a response time compensation operation to compensate a response time delay caused by the characteristic of the display unit 150 such as an LCD or the like, and a gamma correction operation to correct an error caused by a difference between the strength and the brightness (or luminance) of the video signal. In this exemplary embodiment, the correcting part 140 corrects a characteristic such as a gray-to-gray response time in the LCD. Further, the correcting part 140 performs the correction so as to overcome a problem that colors in regions of low brightness and/or medium brightness are distorted since a gamma characteristic (or gamma curve) of the LCD does not correspond to a standard gamma characteristic. The correcting part 140 performs the response-time compensation and the gamma correction simultaneously, thus shortening a time required for the video processing, simplifying a circuit configuration and hence reducing production costs.

The displaying part 150 displays the video based on the corrected video signal. In this exemplary embodiment, the displaying part 150 includes an LCD.

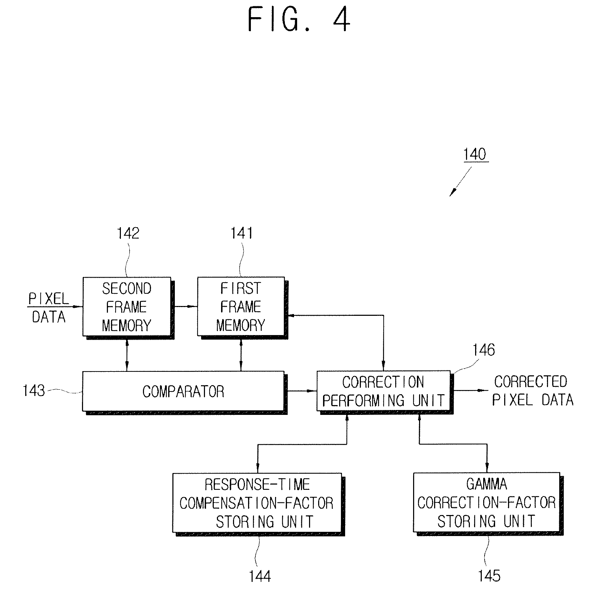

FIG. 4 is a block diagram illustrating a detailed configuration of the correcting part 140 in the video processing apparatus 100 of FIG. 3, according to an exemplary embodiment of the present invention. As shown in FIG. 4, the correcting part 140 includes a first frame memory 141, a second frame memory 142, a comparator 143, a response time compensation factor storing unit 144, a gamma correction factor storing unit 145, and a correction performing unit 146.

In the first frame memory 141 and the second frame memory 142 are stored pixel data in the unit of frame. More specifically, in the first frame memory 141 and the second frame memory 142 are stored the pixel data for each pixel of two consecutive frames, (hereinafter, referred to as "a first frame" and "a second frame"), respectively. In this exemplary embodiment, the second frame memory 142 stores the pixel data later by one frame than the pixel data stored in the first frame memory 141. Hereafter, the pixel data stored in the first frame memory 141 and the second frame memory 142 will be also referred to "first pixel data" and "second pixel data," respectively. In this exemplary embodiment, the first frame memory 141 and the second frame memory 142 are examples of a "first frame storing unit" and a "second frame storing unit," respectively.

The comparator 143 compares the first pixel data and the second pixel data stored in the first frame memory 141 and the second frame memory 142, respectively, between pixels in the same location and outputs a difference between the first and second pixel data. The response time compensation factor storing unit 144 stores response time compensation factors corresponding to the difference between pixel data of two frames in the form of a table. The response time compensation factors may be experimentally determined and stored in the response time compensation factor storing unit 144.

The gamma correction factor storing unit 145 stores gamma correction factors corresponding to pixel data in the form of a table. For example, if the pixel data has a gray scale of 256, the gamma correction factors corresponding to levels of the gray scale of 256 can be stored in the gamma correction factor storing unit 145.

The correction performing unit 146 corrects the first pixel data by simultaneously applying the response-time compensation factor corresponding to the difference between the first and second pixel data outputted from the comparator 143 by referring to the response time compensation factor storing unit 144 and the gamma correction factor corresponding to the first pixel data stored in the first frame memory 141 by referring to the gamma correction factor storing unit 15b.

For example, if the first pixel data for a certain pixel has a gray scale of 128, the second pixel data has a gray scale of 100, the response-time compensation factor corresponding to a difference, which is a gray scale of 28, between the first and second pixel data has a gray scale of 10, and the gamma correction factor corresponding to the first pixel data having a gray scale of 128 has a gray scale of 5, the correction performing unit 146 outputs a gray scale of 143 (=128+10+5) as pixel data corrected for the first pixel data by applying the response time compensation factor (=10) and the gamma correction factor(=5) to the first pixel data(=128).

As an alternative, if the first pixel data for a certain pixel has a gray scale of 100, the second pixel data has a gray scale of 128, the response time compensation factor corresponding to a difference, which is a gray scale of -28, between the first pixel data and the second pixel data has a gray scale of -10, and the gamma correction factor corresponding to the first pixel data having a gray scale of 100 has a gray scale of -3, the correction performing unit 146 outputs a gray scale of 87 (=100-10-3) as pixel data corrected for the first pixel data by applying the response time compensation factor(=-10) and the gamma correction factor(=-3) to the first pixel data(=100).

The comparator 143 and the correction performing unit 146 may be implemented by a hardware such as a logic circuit or a computer program (software) executed by a microprocessor such as a central processing unit (CPU).

The video processing apparatus according to this exemplary embodiment can perform the response time compensation and the gamma correction at once through one integrated process by employing two frame memories, instead of two separate processes that need three frame memories, thereby shortening a time to process a video and simplifying a circuit configuration. Accordingly, production costs can be reduced.

In particular, the one integrated process required for two frame memories can reduce one frame in a delay time as compared the two separate processes required for three frame memories.

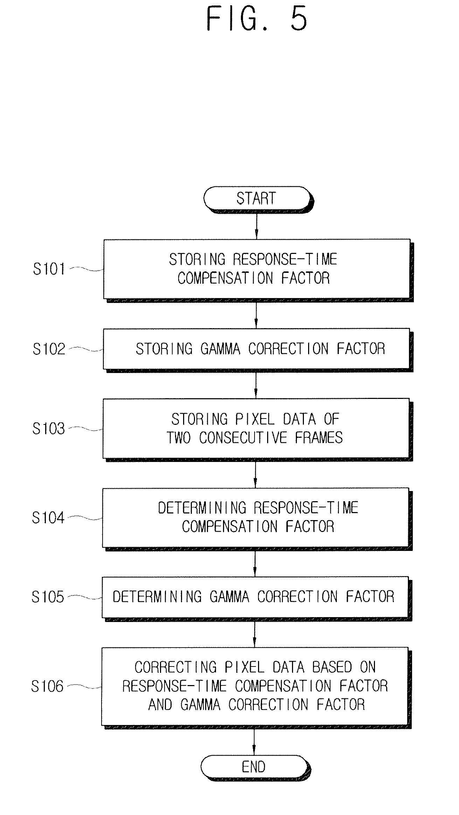

FIG. 5 is a flow chart illustrating a video processing method according to an exemplary embodiment of the present invention. First, response-time compensation factors to be used to compensate a response time of, for example, an LCD are stored in a predetermined memory at operation S101. The response-time compensation factors are determined to correspond to differences between the pixel data for each pixel of two consecutive frames. Further, gamma correction factors to be used for gamma correction of the LCD are stored in a predetermined memory at operation S102. The gamma correction factors are determined to correspond to gray scales of the pixel data.

Next, pixel data of consecutive two frames are stored in predetermined memories, respectively at operation S103. Subsequently, a response-time compensation factor corresponding to a difference between the pixel data of the two consecutive frames among the stored response correction factors is determined at operation S104. Further, a gamma correction factor corresponding to the pixel data to be corrected among the stored gamma correction factors is determined at operation S105. Finally, the pixel data is corrected by simultaneously applying the determined response-time compensation factor and the determined gamma correction factor at operation S106.

As described above, the exemplary embodiment of the present invention provides a video processing apparatus and a video processing method which is capable of reducing a delay time for video display and lowering production costs.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. A video processing apparatus (100) comprising:
a storing unit (140) which stores first pixel data of a first frame of a video, second pixel data of a second frame of the video, a first correction factor, and a second correction factor,
wherein the first frame precedes the second frame, the first correction factor corresponds to a difference between the first pixel data and the second pixel data, and the second correction factor corresponds to the first pixel data; and
a correction performing unit (140) which corrects the first pixel data by simultaneously applying the first correction factor and the second correction factor.

2. The video processing apparatus (100) according to claim 1, wherein the second correction factor corresponds to a difference between the strength of a video indicated by the first pixel data and the brightness of the video indicated by the first pixel data.

3. The video processing apparatus (100) according to claim 1 or claim 2, further comprising a display unit (150) which displays the video, wherein the first correction factor is used for compensating a response time delay caused by a characteristic of the display unit.

4. The video processing apparatus (100) according to claim 3, wherein the characteristic comprises a gray-to-gray response time of the display unit (150).

5. The video processing apparatus (100) according to any preceding claim, further comprising a liquid crystal display (LCD) which displays the video based on the first pixel data.

6. The video processing apparatus (100) according to any preceding claim, wherein the first and second frames are consecutive frames of the video in time.

7. The video processing apparatus (100) according to claim 1, wherein the storing unit (140) comprises:
a first frame storing unit (141) which stores the first pixel data;
a second frame storing unit (142) which stores the second pixel data;
a first correction factor storing unit (144) which stores the first correction factor; and
a second correction factor storing unit (145) which stores the second correction factor.

8. A video processing method comprising:
storing a first correction factor corresponding to a difference between first pixel data of a first frame of a video and second pixel data of a second frame of the video, wherein the first frame precedes the second frame;
storing a second correction factor corresponding to the first pixel data;
storing the first pixel data;
storing the second pixel data; and
correcting the first pixel data by simultaneously applying the first correction factor and the second correction factor.

9. The video processing method according to claim 8, wherein the second correction factor corresponds to a difference between the strength of a video indicated by the first pixel data and the brightness of the video indicated by the first pixel data.

10. The video processing apparatus according to claim 8 or claim 9, further comprising displaying the video, wherein the correcting of the first pixel data comprises compensating a response time delay, caused by a characteristic of a display unit (150) which displays the video, by applying the first correction factor.

11. The video processing method according to claim 10, wherein the characteristic comprises a gray-to-gray response time of the display unit (150).

12. The video processing method according to any of claims 8 - 11, further comprising displaying the video based on the corrected first pixel data on a liquid crystal display (LCD).

13. The video processing method according to any of claims 8 - 12, wherein the first and second frames are consecutive frames of the video in time.

14. A video processing apparatus (1) comprising:
a storing unit (14,15) which stores first pixel data of a first frame of a video, and second pixel data of a second frame of the video, a first correction factor, and a second correction factor,
wherein the first frame precedes the second frame, the first correction factor corresponds to a difference between the first pixel data and the second pixel data, and the second correction factor corresponds to the first pixel data;
a first correction performing unit (14) which corrects the first pixel data by applying the first correction factor; and
a second correction performing unit (15) which corrects the first pixel data, corrected by applying the first correction factor, by applying the second correction factor.

15. The video processing apparatus according to claim 14, wherein the second correction factor corresponds to a difference between the strength of a video indicated by the first pixel data and the brightness of the video indicated by the first pixel data.

16. The video processing apparatus (1) according to claim 14 or claim 15, further comprising a display unit (16) which displays the video, wherein the first correction factor is used for compensating a response time delay caused by a characteristic of the display unit.

17. The video processing apparatus (1) according to claim 16, wherein the characteristic comprises a gray-to-gray response time of the display unit.

18. The video processing apparatus (1) according to any one of claims 14 - 16, wherein the first and second frames are consecutive frames of the video in time.

19. The video processing apparatus (1) according to claim 14, wherein the storing unit (14, 15) comprises:
a first frame storing unit (14a) which stores the first pixel data;
a second frame storing unit (14b) which stores the second pixel data;
a third frame storing unit (15a) which stores the first pixel data corrected by applying the first correction factor;
a first correction factor storing unit (14d) which stores the first correction factor; and
a second correction factor storing unit (15d) which stores the second correction factor.

20. A video processing method comprising:
storing a first correction factor corresponding to a difference between first pixel data of a first frame of a video and second pixel data of a second frame of the video, wherein the first frame precedes the second frame;
storing a second correction factor corresponding to the first pixel data;
storing the first pixel data;
storing the second pixel data;
correcting the first pixel data by applying the first correction factor;
storing the first pixel data corrected by applying the first correction factor; and
correcting the first pixel data, corrected by the first correction factor, by applying the second correction factor.

21. The video processing method according to claim 20, wherein the second correction factor corresponds to a difference between the strength of a video indicated by the first pixel data and the brightness of the video indicated by the first pixel data.

22. The video processing method according to claim 20 or claim 21, further comprising displaying the video, wherein the correcting of the first pixel data by applying the first correction factor comprises compensating a response time delay, caused by a characteristic of a display unit which displays the video, by applying the first correction factor.

23. The video processing method according to claim 22, wherein the characteristic comprises a gray-to-gray response time of the display unit.

24. The video processing method according to any one of claims 20 - 23, wherein the first and second frames are consecutive frames of the video in time.
